# EUROPEAN PATENT SPECIFICATION

(11) **EP 1 359 347 B1**
(45) Date of publication and mention of the grant of the patent: **27.09.2006**
(21) Application number: 02009660.8
(22) Date of filing: 29.04.2002
(51) Int. Cl.: F16H 61/00, F16K 15/18, A01F 12/56

(54) **Fluid operated actuator**
Druckmittelzylinder
Vérin à fluide

(43) Date of publication of application: 05.11.2003
(73) Proprietor: Dronningborg Industries A/S, 8900 Randers (DK)
(72) Inventor: Jensen, Peter, 8900 Randers (DK)
(74) Representative: Morrall, Roger

(56) References cited:
- DE-A- 3 040 800
- DE-B- 1 093 679
- FR-A- 1 130 289
- FR-A- 1 292 778
- FR-A- 2 415 733
- US-A- 2 827 766
- US-A- 3 202 234
- US-A- 3 540 472

## Description

### Field of the Invention

This invention relates to a fluid actuator for operating a variator forming part of a transmission, and in particular to combine a harvester comprising such a transmission.

### Background of the Invention

Combine harvesters generally include a threshing drum. In order to provide for the threshing drum to be driven at different speeds a transmission is provided between the engine and the threshing drum. It is desirable to run the combine harvester's engine at a substantially constant speed, and therefore an infinitely variable transmission has been found to be the most effective transmission for transmitting drive from the engine to the threshing drum. Two types of infinitely variable drives are commonly used in combine harvesters to provide drive for the threshing drum. The first is a belt and pulley drive, at least one of the pulleys being in the form of a variator, where the pulley wheel is separated into two halves known as sheaves. The distance between the sheaves can be adjusted in order to change the effective diameter of the pulley, and hence the ratio of the transmission. The second type of infinitely variable drive used is a hydrostatic transmission. The present invention is concerned with transmissions of the variator type.

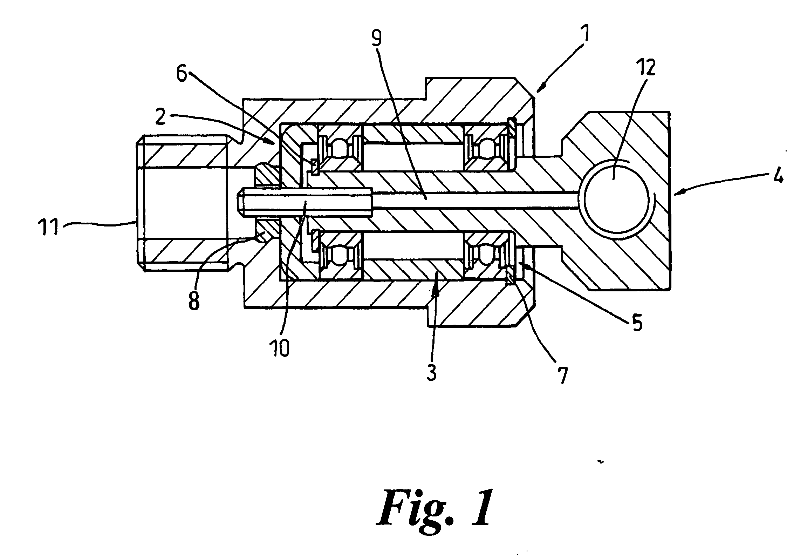

The sheaves of the variator are moved towards and away from each other by means of a fluid operated actuator (generally hydraulic fluid). A part of the actuator is connected to the variator for rotation therewith. Another part of the variator is held stationary, and is connected to a supply of hydraulic fluid, which when introduced into or removed from the actuator causes the sheaves of the variator to move towards or away from each other. In a known actuator (shown in Figure 1 and used on the Applicant's own earlier machines) a rotational rubber seal is used to provide a hydraulic seal between stationary and rotating parts. A similar variator arrangement is also shown in FR-A-1292778, which discloses a fluid actuator according to the preamble of claim 1. The rubber seal of such variators wears and must be replaced. Replacing the seal causes downtime for the combine harvester, which during harvest may be detrimental to the gathering of the crop.

### Summary of the Invention

The aforementioned problems are solved by a fluid actuator according to claim 1, a variator according to claim 5, a threshing machine according to claim 6, and a combine harvester according to claim 7.

According to the present invention, there is provided a fluid operated actuator for a variator as specified in claim 1.

Preferred features of the actuator of the invention are as specified in the claims dependant on claim 1.

The invention also provides a variator controlled by a fluid actuator as specified in claim 1, a threshing mechanism which includes such a variator and a combine harvester which includes such a threshing mechanism.

### Brief Description of the Drawings

In the drawings, which illustrate a hydraulic actuator assembly for adjusting the distance between sheaves of a variator:
Figure 1 is a cross-sectional elevation of an actuator of the prior art;
Figure 2 is a cross-sectional elevation of an actuator according to the invention;
Figure 3 is a cross-sectional elevation of a variator according to the invention;
Figure 4 is a side view of the threshing drum according to the invention; and
Figure 5 is a side view of a combine harvester according to the invention.

### Detailed Description of the Preferred Embodiments

Referring now to Figure 1, which illustrates one of the Applicant's own prior art actuator for moving the sheaves of a variator towards and away from each other. The actuator comprises a shaft 4 which is held stationary, and a housing 1 which rotates about the shaft 4. Rotation between the two parts 4 and 1 is provided for by bearings 6 and 7.

The shaft 4 includes a bore 9 with a tube 10 being inserted in one end thereof. The tube 10 passes through the sleeve 3 which lines the housing 1 and into a chamber 11. A rubber seal 8 is provided between the inner wall 12 of the chamber 11, and the end wall of the liner 3. The seal 8 rotates with respect to the shaft and is stationary with respect to the housing 1. This causes the seal wear problem discussed above.

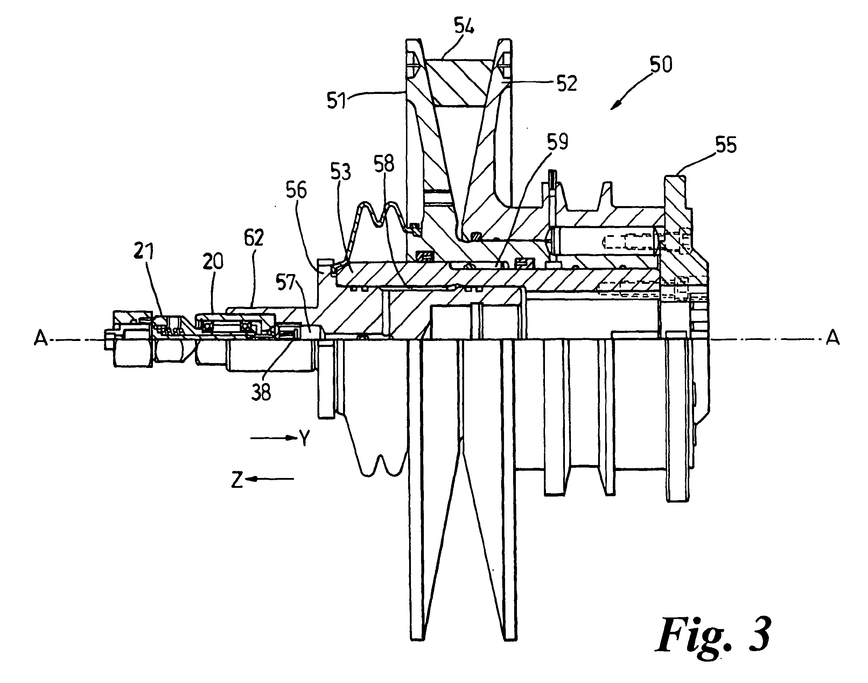

The actuator functions are as follows: The actuator is fitted to a variator by inserting the housing 1 of the actuator into the end portion 51 of the housing 56 of the variator shown in Figure 3. Pressurised hydraulic fluid is introduced through the aperture 12, and passes through the bore 9 into the chamber 11. The pressurised hydraulic fluid moves the sheaves of the variator together. The sheaves of the variator are moved apart by drawing pressurised hydraulic fluid out of the chamber 11 through the bore 9 and aperture 12.

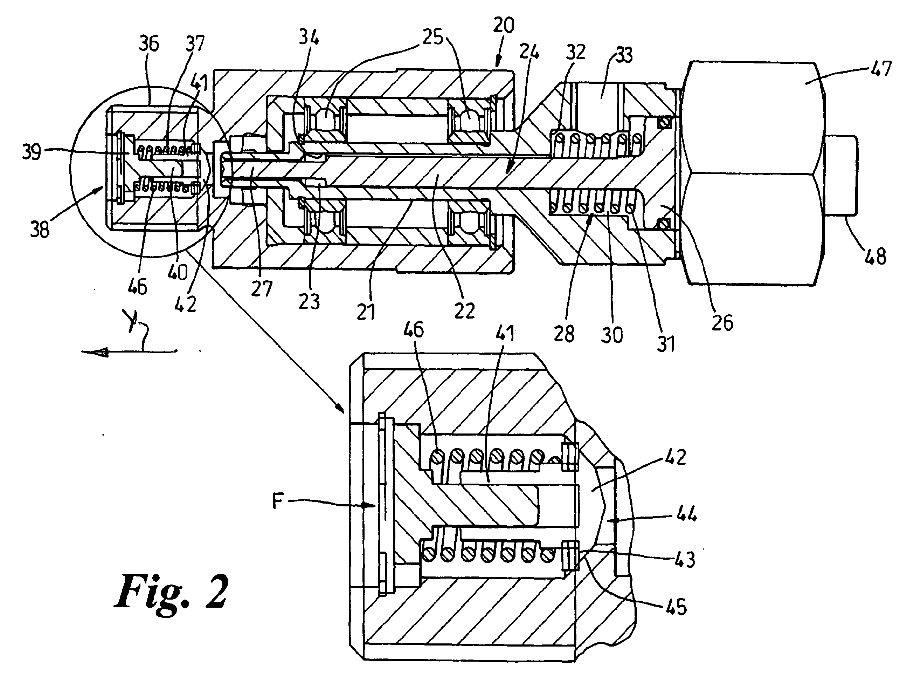

Referring now to Figure 2, there is shown an hydraulic actuator according to the invention. Housing 20 is rotatably mounted on the shaft 21 by means of bearings 25. The shaft 21 comprises a bore 23 in which a piston 24 is slidably mounted. The piston 24 comprises a piston rod 22 having a piston head 26 at one end thereof, and a portion of reduced diameter 27 at the other end thereof. The bore 23 in which the piston slides opens out into a cylinder 28, an end region 29 of which receives the piston head 26. In the region 30, the diameter of cylinder 28 is intermediate the diameters of the main bore 23 and the end region 29 the cylinder. A coil spring 31 is located in the region 30 of the cylinder 28. The piston rod 25 passes through the coil spring 31. The coil spring acts on the piston head 26 and an end face 32 of the cylinder 28 to bias the piston into the position shown in Figure 2.

The shaft 21 comprises, as an inlet connection, a fluid inlet 33 perpendicular to the cylinder 28. The piston rod 22 comprises a flattened surface 34, which co-operates with the bore 23 to provide a conduit through which hydraulic fluid introduced through the inlet 33 and cylinder 28 may pass.

The housing 20 includes a boss 36 at one end thereof. The boss 36 comprises, as a valve chamber, a chamber 37 in which a valve assembly 38 sits. The valve assembly 38 comprises a guide member 39 having a projection 40. The projection 40 is slidably received in a body 41 of a check valve 42, which is shown closing off the inlet 44 of the chamber 37. The inlet 44 to the chamber 37 is formed in the end of the bore 23 running through the housing 20. At the point where the valve 42 sits on the inlet 44 to the chamber 37, the bore is chamfered 45 at an angle which matches the angle of a chamfer on the valve 42. Alternatively, the end of the bore may comprise a concave curved surface, with a valve 42 comprising a corresponding convex curved surface to form a sealing closure. A rubber seal 43 is provided on the body 41 behind the valve 42 to ensure sealing between the inlet 44 and the chamber 37 when the valve 42 is in its closed position. A coil spring 46 located in the chamber 37 acts between the guide member 39 and the valve 42 to bias the valve 42 towards the inlet 44.

The cylinder 28 is closed by an end cap 47 which includes a connector 48 for connection to a supply of hydraulic fluid, such that pressurised hydraulic fluid may be introduced in to the cylinder 30 to exert a pressure on the piston head 26 on the upstream side of the inlet 33. The supply of hydraulic fluid into and out of the cylinder 28 is controlled by a suitable hydraulic valve.

The fluid used to operate the actuator may be hydraulic fluid or air.

Referring now to Figure 3, there is shown a variator 50. The variator 50 comprises sheaves 51, 52, the sheave 51 being slidably mounted on a shaft 53 which forms a bearing surface, and is slidable thereon towards and away from the sheave 52 thereby changing the distance between the sheaves to adjust the position of the V-belt 54 relative to the central axis A-A of the sheaves, and hence change the drive ratio of the transmission. The sheave 52 is fixed to an end plate 55, and is not moveable relative to the sheave 51.

A housing 56 is inserted into the shaft 53. An end portion 51 of the housing 56 receives the actuator shown in Figure 2. The housing 20 of the actuator is located in the end portion 51 of the housing 56. The boss 36 of the actuator locates in a bore 57 in the housing 56, which bore continues to form a conduit through which oil may flow (in the direction indicated by arrow X). The bore 57 follows a path first in the axial direction of the housing 56 and then perpendicular to the said axis direction. The bore 57, chamber 59 formed between the sleeve 53 and the sheave 51, a connecting chamber 58, formed by an indent in the housing 56 and the internal surface of the sleeve 53 are charged with hydraulic fluid.

The sheave 51 is moved towards and away from the sheave 52 by increasing or decreasing the pressurisation of the fluid in the chambers 57, 58 and 59, and the connecting conduits. The actuator shown in Figure 2 causes this change in pressurisation. As described above with reference to Figure 2, the result of introducing fluid into the inlet 33 is the introduction of fluid into the chamber 37. This compresses the fluid contained in the chambers 57, 58, 59 and their connecting bores, thereby causing movement of the sheave 51 towards sheave 52.

When it is desired to move the sheave 51 away from the sheave 52, fluid pressure is exerted on the piston head 26, thereby moving the piston 24 towards the valve 42. The end of the piston rod 22 engages with the valve to lift it off its seat. This allows fluid to flow out of the chamber 37, reducing the pressure therein, which in turn causes a reduced pressure in the chambers 57, 58, 59 and the connecting bores, resulting in movement of the sheave 51 away from the sheave 52.

The housing 56, shaft 53, end plate 55 and variator sheaves 51 and 52, together with the housing 20 of the actuator rotate together, whilst the shaft 21 is held stationary.

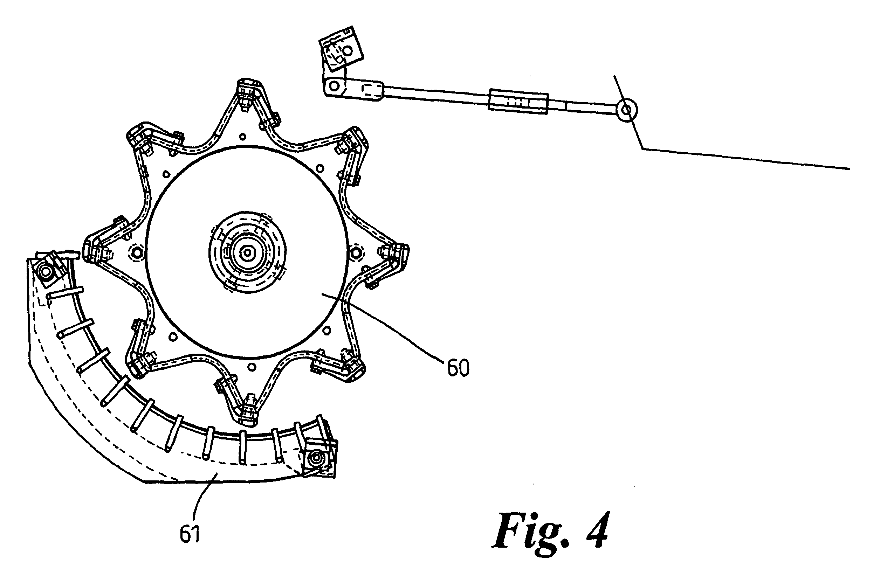

Figure 4 illustrates a threshing mechanism comprising a rotatable threshing drum 60 and a concave 61. The threshing drum is driven by a transmission comprising a variator of the type shown in Figure 3.

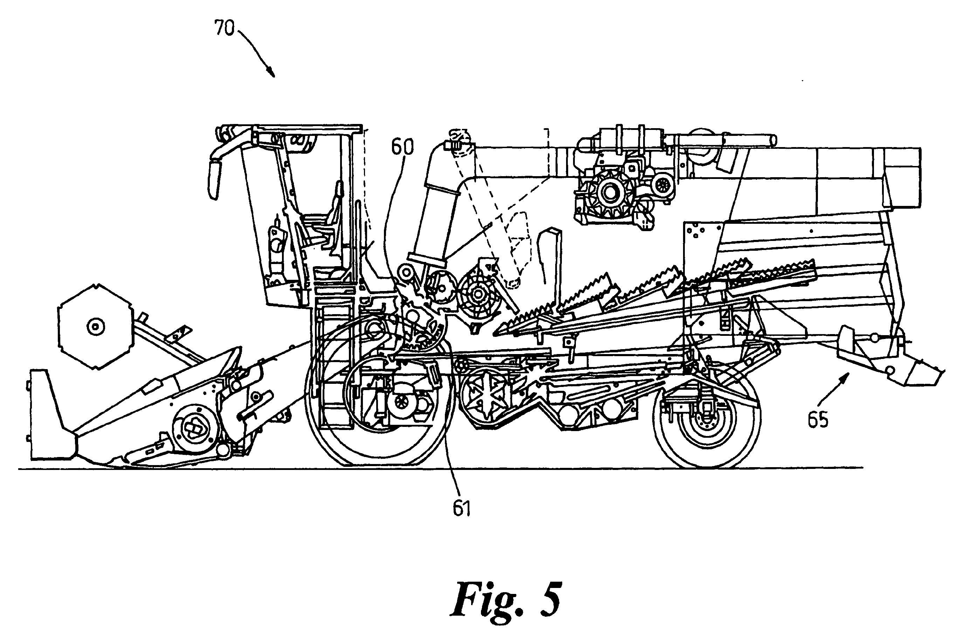

Figure 5 illustrates a combine harvester comprising a threshing mechanism of the type shown in Figure 4, and driven by a transmission of the type shown in Figure 3.

The actuator of the invention may be retro-fitted as a replacement part to variators actuated by variators of the type shown in Figure 1 or other existing actuators. The actuator of the invention may be used in any situation where it is necessary to generate axial movement of a rotating body, not just variators. Similarly, the variator of the invention is not limited to use in threshing machines. For example, on a combine harvester the straw chopper 65 in Figure 5 may be driven via a variator of the invention.

The actuator and variator of the invention avoid the requirement for a rotary seal. This is particularly advantageous as the wear characteristics of a rotary seal are such the frequent replacement is necessary, resulting in downtime during harvest. Since timeliness is critical during the harvesting season, a modification which avoids downtime is particularly valuable.

## Claims

1. A fluid actuator for a variator having first and second sheaves(51,52) wherein at least one of the sheaves is movable towards and away from the other sheave under fluid pressure admitted to a sheave actuating chamber (59), the actuator comprising a housing (20) which is receivable within the variator, such that said housing (20) can then rotate with the variator, and a non-rotatable shaft (21) which is received at least partially within the housing and which includes an inlet connection (33) through which fluid can be introduced down a passage (23) within the shaft into the sheave actuating chamber (59) to adjust the relative positions of the sheaves, the fluid actuator being **characterised in that** one end of the housing (20) includes a valve chamber (37) connectable with the sheave actuating chamber (59) and that in the valve chamber is disposed a check valve (41,42) which is biased (46) to close a valve seat (45) to maintain pressure in the sheave actuating chamber (59), the check valve being openable against the spring bias by the introduction of pressurised fluid into the shaft inlet connection (33) and down the shaft passage (23) to pressurise the sheave actuating chamber to move the sheaves (51,52) relative to each other in one direction, and being operable against the spring bias means (46) to release pressure from the sheave actuating chamber (59) and allow movement of the sheaves relative to each other in the opposite direction by displacement of a piston (24) slidable within the passage (23) towards the check valve (41,42) to unseat the check valve.

2. An actuator according to Claim 1, wherein one end of the piston (24) comprises a piston head (26), and the piston head is in sealed sliding contact in a cylinder portion of the passage (23), admission of fluid into said cylinder portion moving the piston within the passage (23) to unseat the check valve (41,42).

3. An actuator according to Claim 2, wherein a spring (31) is mounted in the passage and acts on the first piston head (26) to bias the piston in opposition to any fluid pressure in the cylinder portion.

4. An actuator according to any one of claims 1 to 3, wherein the check valve (41,42) has a chamfered surface which cooperates with the valve seat (45) formed at the inlet to the valve chamber (37).

5. A variator having first and second sheaves (51,52) at least one of which is moveable towards and away from the other sheave under fluid pressure admitted to a sheave actuating chamber (59) under the control of a fluid actuator according to any one of claims 1 to 4.

6. A threshing mechanism comprising a threshing drum, a source of rotational power, and a transmission for varying the speed of the threshing drum, wherein the transmission comprises a variator as claimed in claim 5.

7. A combine harvester comprising a threshing mechanism as claimed in claim 6.

## Patentansprüche

1. Ein Fluid-betätigter Druckmittelzylinder für einen Variator mit einer ersten und einer zweiten Antriebsscheibe (51, 52), von denen eine Antriebsscheibe gegenüber der anderen Antriebsscheibe infolge Druckmitteldruck in eine Kammer (59) zur Betätigung der Antriebsscheibe hin und her verschiebbar ist, wobei der Druckmittelzylinder ein im Variator angeordnetes und mit dem Variator rotierendes Gehäuse (20) und eine nicht drehbare Welle (21) aufweist, die zumindest teilweise in dem Gehäuse aufgenommen ist und einen Eingangsanschluss (33) aufweist, durch den Fluid über einen Kanal (23) in der Welle in die Kammer (59) zur Betätigung der Antriebsscheibe zwecks Einstellung der relativen Lagen der Antriebsscheiben eingebracht werden kann, **dadurch gekennzeichnet, dass** ein Ende des Gehäuses (20) eine Ventilkammer (37) aufweist, die mit der Kammer (59) zur Betätigung der Antriebsscheibe in der eine Ventileinheit angeordnet ist, und dass in der Ventilkammer ein Rückschlagventil (41, 42) angeordnet ist, das zum Schließen eines Ventilsitzes (45) belastet (46) ist, um den Druck in der Kammer (59) zur Betätigung der Antriebsscheibe aufrecht zu halten, wobei das Rückschlagventil gegen die Beaufschlagung durch die Feder durch die Einbringung unter Druck stehenden Fluids in den Eingangsanschluss (33) und in den Kanal (23) geöffnet werden kann, um die Kammer zur Betätigung der Antriebsscheibe unter Druck zu setzen und die Antriebsscheiben (51, 52) relativ zueinander in eine Richtung zu bewegen, und gegen Belastungsmittel (46) der Feder betätigt werden kann, um Druck aus der Kammer (59) zur Betätigung der Antriebsscheibe abzulassen und eine Bewegung der Antriebsscheiben relativ zueinander in entgegen gesetzter Richtung durch Verschiebung eines Kolbens (24) zuzulassen, der in dem Kanal (23) in Richtung auf das Rückschlagventil (41, 42) gleitend gelagert ist, um das Rückschlagventil zu öffnen.

2. Ein Druckmittelzylinder nach Anspruch 1, **dadurch gekennzeichnet, dass** ein Ende des Kolbens (24) einen Kolbenkopf (26) aufweist, und dass sich der Kolbenkopf in abgedichtetem Gleitkontakt in einem Zylinderbereich des Kanals (23) befindet, wobei die Zufuhr von Fluid in den Zylinderbereich den Kolben in dem Kanal (23) zum Öffnen des Rückschlagventils bewegt.

3. Ein Druckmittelzylinder nach Anspruch 2, **dadurch gekennzeichnet, dass** eine Feder (31) in dem Kanal angeordnet ist und auf den ersten Kolbenkopf (26) einwirkt, um den ersten Kolben in die entgegen gesetzte Richtung zu jeglichen Druck in dem Zylinderbereich zu beaufschlagen.

4. Ein Druckmittelzylinder nach einem der Ansprüche 1 bis 3, **dadurch gekennzeichnet, dass** das Rückschlagventil (41, 42) eine Schrägfläche aufweist, die mit dem Ventilsitz (45) zusammenarbeitet, der am Eingang zu der Ventilkammer (37) gebildet ist.

5. Ein Variator mit einer ersten und einer zweiten Antriebsscheibe, wobei mindestens eine der Antriebsscheiben unter Fluiddruck in eine Betätigungskammer (59) in Richtung der anderen Antriebsscheibe und von dieser weg infolge Ansteuerung eines Druckmittelzylinders mit Merkmalen der Ansprüche 1 bis 4.

6. Eine Dreschvorrichtung mit einer Dreschtrommel, einer Quelle für Rotationsenergie, einem Getriebe zum Verändern der Geschwindigkeit der Dreschtrommel, **dadurch gekennzeichnet, dass** das Getriebe einen Variator gemäß Anspruch 5 aufweist.

7. Ein Mähdrescher mit einer Dreschvorrichtung gemäß Anspruch 6.

## Revendications

1. Vérin à fluide pour un variateur ayant des première et seconde poulies (51, 52) dans lequel au moins une des poulies est mobile pour se rapprocher et s'éloigner de l'autre poulie sous pression de fluide admise dans une chambre d'actionnement de poulie (59), le vérin comprenant un logement (20) qui peut être reçu à l'intérieur du variateur, de sorte que ledit logement (20) peut alors tourner avec le variateur, et un arbre non-rotatif (21) qui est reçu au moins partiellement à l'intérieur du logement et qui comprend un raccord d'entrée (33) à travers lequel le fluide peut être introduit dans un passage (23) à l'intérieur de l'arbre dans la chambre d'actionnement de poulie (59) pour ajuster les positions relatives des poulies, le vérin à fluide étant **caractérisé en ce qu'**une extrémité du logement (20) comprend une chambre de soupape (37) raccordable avec la chambre d'actionnement de poulie (59) et que dans la chambre de soupape est disposée une soupape d'arrêt (41, 42) qui est sollicitée (46) pour fermer un siège de soupape pour maintenir une pression dans la chambre d'actionnement de poulie (59), la soupape d'arrêt étant ouvrable contre la sollicitation de ressort par l'introduction de fluide sous pression dans le raccord d'entrée d'arbre (33) et dans le passage d'arbre (23) pour mettre sous pression la chambre d'actionnement de poulie pour déplacer les poulies (51, 52) l'une par rapport à l'autre dans une direction, et étant actionnable contre la sollicitation de moyens de ressort (46) pour libérer la pression à partir de la chambre d'actionnement de poulie (59) et permettre le mouvement des poulies l'une par rapport à l'autre dans la direction opposée par le déplacement d'un piston (24) pouvant coulisser à l'intérieur du passage (23) vers la soupape d'arrêt (41, 42) pour déloger la soupape d'arrêt.

2. Vérin selon la revendication 1, dans lequel une extrémité du piston (24) comprend une tête de piston (26), et la tête de piston est en contact coulissant hermétique dans une partie de cylindre du passage (23), l'admission de fluide dans ladite partie de cylindre déplaçant le piston à l'intérieur du passage (23) pour déloger la soupape d'arrêt (41, 42).

3. Vérin selon la revendication 2, dans lequel un ressort (31) est monté dans le passage et agit sur la première tête de piston (26) pour solliciter le piston en opposition à une pression de fluide quelconque dans la partie de cylindre.

4. Vérin selon l'une quelconque des revendications 1 à 3, dans lequel la soupape d'arrêt (41, 42) a une surface chanfreinée qui coopère avec le siège de soupape (45) formé au niveau de l'entrée de la chambre de soupape (37).

5. Variateur ayant des première et seconde poulies (51, 52) dont au moins une est mobile pour se rapprocher et s'éloigner de l'autre poulie sous une pression de fluide admise dans une chambre d'actionnement de poulie (59) sous la commande d'un vérin à fluide selon l'une quelconque des revendications 1 à 4.

6. Mécanisme de battage comprenant un batteur, une source de puissance de rotation, et une transmission pour varier la vitesse du batteur, dans lequel la transmission comprend un variateur selon la revendication 5.

7. Moissonneuse-batteuse comprenant un mécanisme de battage selon la revendication 6.
